# EUROPEAN PATENT SPECIFICATION

(11) **EP 0 479 389 B1**
(45) Date of publication and mention of the grant of the patent: **19.04.1995**
(21) Application number: 91202575.6
(22) Date of filing: 02.10.1991
(51) Int. Cl.: A47J 31/54

(54) **Through-flow heater connection**
Durchlauferhitzerverbindung
Connection d'un chauffe-eau continu

(30) Priority: 03.10.1990 NL 9002149
(43) Date of publication of application: 08.04.1992
(73) Proprietor: Smitdesign B.V., NL-3958 BP Amerongen (NL)
(72) Inventor: Smit, Gerard Clement, NL-3958 BP Amerongen (NL)
(74) Representative: Smulders, Theodorus A.H.J., Ir.

(56) References cited:
- CH-A- 395 659
- CH-A- 451 439
- DE-A- 1 916 631
- DE-A- 2 638 380
- DE-A- 2 732 735
- DE-B- 1 097 104
- US-A- 4 841 310

## Description

This invention relates to an apparatus for preparing hot drinks, such as coffee or tea with a tubular through-flow heater having a bottom plate and with a water supply duct comprising a connecting construction for connecting said water supply duct to the bottom plate of said tubular through-flow heater.

In a known type of coffee or tea making apparatus, a water compartment arranged at a higher level is connected via a supply duct to the bottom of an upright, tubular, electric through-flow heater, which is arranged under the water compartment and whose top is connected via a riser to an outlet pipe for heated water, which outlet pipe terminates above a filter containing ground coffee or tea.

One connection of the supply duct to the through-flow heater of a coffee making apparatus having the features of the preamble of claim 1 is disclosed in DE-A-2,638,380.

Another known option in effecting the connection of the water compartment to the tubular through-flow heater, is to secure a bottom plate to the lower end of the heater tube by folding, which bottom plate is provided with an aperture through which extends the supply duct which is in communication with the water compartment and is connected to the wall of the aperture by soldering. A central connecting bolt, which extends through the bottom, must also be soldered. Further, this bolt, at the end thereof that is disposed in the through-flow heater, carries a water-spreading member riveted thereto. Although this construction is more robust and durable than the connection disclosed in the above-mentioned German Offenlegungsschrift, it also has a number of disadvantages.

In the first place, for this known connecting construction to be realized, a comparatively large number of assembling operations must be performed, and careful testing is required. This makes the product relatively expensive.

The object of this invention is to provide a connecting construction of the type described, in which the disadvantages mentioned have been obviated.

To that end, the apparatus of the type described in the opening paragraph hereof, is characterized according to the invention in that the bottom plate of the tubular through-flow heater is formed by an assembly of two hard plates having a plate of a rubber-elastic material interposed between them, which plates have a diameter which is only slightly smaller than the inside dimension of the tube part of the through-flow heater, with at least the aperture for passing the supply duct therethrough extending through the three plates and a screwed bolt being arranged for drawing the hard plates towards each other.

When the bottom so composed has been arranged in the lower end of the through-flow heater tube and the corresponding end of the supply duct has been arranged in the aperture intended for that purpose, it is sufficient to draw the two hard plates towards each other to connect the bottom to the tube and the supply duct to the bottom. The fact is that by drawing the two hard bottom plates towards each other, the clamped rubber-elastic material will expand laterally and so effect clamping connections, thereby simultaneously securing the bottom in the tube of the through-flow heater and the supply duct in the aperture in a manner ensuring complete and permanent water-tightness.

For reasons of hygiene, the hard plates are preferably made of stainless steel. Silicone rubber can be chosen as a rubber-elastic material, but excellent results have been obtained with EPDM, which is less expensive.

In further elaboration of the invention, the screwed bolt can extend through the plate assembly and retain, on the inside of the heating element, a spacer sleeve and a water-spreading member necessary for uniform distribution of incoming water along the inside wall of the heating element, and the lower end of the thread of the screwed bolt may at the same time be used for securing the through-flow heater in the housing of the apparatus. When the plate assembly is being drawn together, the upper portion of the shank of the screwed bolt, which portion is not threaded, is sealed as well by material of the rubber-elastic plate expanding into engagement with the shank portion.

Accordingly, connecting the water supply duct to the through-flow heater and simultaneously positioning the water-spreading member only requires arrangement in position of the bottom having the end of the water supply duct extending therethrough as far as the stop shoulder of the spacer sleeve, followed by tightening the screwed bolt.

To elucidate the invention, one embodiment of the connecting construction will now be described, by way of example, with reference to the accompanying drawings, in which:
Fig. 1 is a schematic side elevation, partly shown in vertical section, of a coffee making apparatus with a through-flow heater; and
Fig. 2 is an enlarged sectional elevation of the connecting construction between the water supply duct and the heat exchanger.

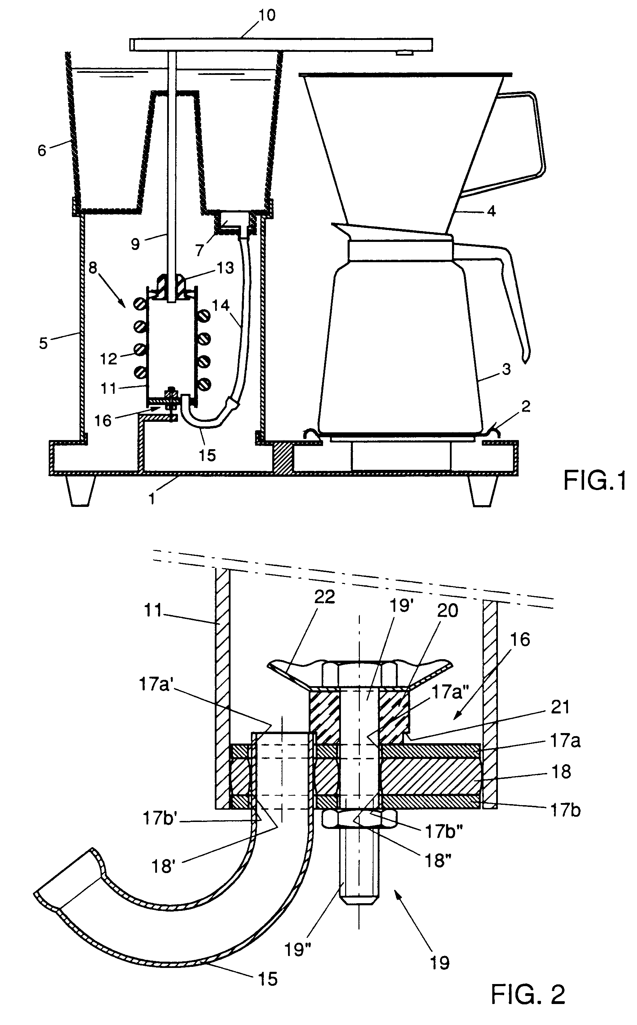

In the schematic side elevation of Fig. 1, such details as electric connections, control knobs, etc., which do not relate to the invention, have been omitted.

The coffee making apparatus comprises a base plate 1 with a hot plate 2 for a coffee pot 3 having a detachable filter funnel 4 arranged thereon. The funnel 4 is adapted to receive a paper filter with ground coffee (not shown).

Resting on the base plate 1 is a hollow housing 5 supporting a water compartment 6. Formed in the bottom of the water compartment in a recessed portion thereof is a chamber for a schematically shown float 7 operating a switch (not shown) which is included in the electric circuit of a through-flow heater 8 and controls the switching on and off of the through-flow heater depending on the presence of water in the compartment. The top of a through-flow heater 8 is connected via a riser 9 to an outlet pipe 10 for heated water, which outlet pipe terminates above the filter funnel 4.

The through-flow heater 8 comprises a tube 11 with a heating coil 12 and is connected to the riser 9 via a connecting sleeve 13. The connection between the water compartment 6 and the through-flow heater 8 is effected by a water supply duct 14 which is connected at one end to the chamber of the float 7 and at the other end, via a bend 15, to the bottom generally indicated by the reference numeral 16 and shown in more detail in Fig. 2.

In the embodiment shown, the bottom 16 is composed of two stainless steel plates 17a and 17b, clamping between them a plate 18 of a rubber-elastic material. The external contours of the plates 17a, 17b, and 18 correspond to the internal contour of the heater tube 11.

Provided in the plates 17a, 17b, 18 are apertures 17a', 17b', 18' and 17a'', 17b'', 18'', respectively, for passing therethrough with some clearance the free end of the bend 15 and a bolt 19. The bolt 19 has a smooth shank portion 19' and a threaded end 19''. When the bolt is being tightened, the metal plates 17a and 17b are drawn towards each other and the intermediate rubber-elastic plate 18 is axially compressed so that the material thereof expands laterally into the apertures 17a', 17b', 18' and 17a'', 17b'', 18'' as well as towards the periphery. The bottom assembly 16 is thereby fixedly sealed against the inside wall of the heat exchanger tube 11 and simultaneously the bend 15 is secured, and likewise sealed, in the apertures 17a', 17b', 18' . Adjacent the bolt 19, the material of the plate 18 is in clamping and sealing engagement with the smooth shank portion 19'.

Disposed between the head of the bolt 19 and the plate 17a is a spacer sleeve 20 with a shoulder 21 which serves as a stop for the end of the bend 15 and at the same time determines the position of the water-spreading member 22. Thus, securing the bottom 16 in the heater tube 11 at the same time fixes the distance by which the bend extends into the heater tube 11 and the position of the water-spreading member 22 above it, these two positions being determinants of optimum spread of the incoming water along the inside wall of the heater.

It will be clear that the invention is not limited to the application described. The connecting method can be used for any connection of a tubular element to another tubular element oriented in the same direction and having a greater diameter.

## Claims

1. Apparatus for preparing hot drinks, such as coffee or tea, with a tubular through-flow heater (8) having a bottom plate and with a water supply duct (14,15) comprising a connecting construction for connecting said water supply duct to the bottom plate of said tubular through-flow heater characterized in that the bottom plate of the tubular through-flow heater (8) is formed by an assembly of two hard plates (17a, 17b) having a plate (18) of a rubber-elastic material interposed between them, which plates (17a, 17b, 18) have a diameter which is only slightly smaller than the inside dimension of the tube part (11) of the through-flow heater (8), with at least the aperture (17a', 17b', 18') for passing the supply duct (14, 15) therethrough extending through the three plates (17a, 17b, 18) and a screwed bolt (19) being arranged for drawing the hard plates (17a, 17b) towards each other.

2. Apparatus according to claim 1, characterized in that the screwed bolt (19) extends through the plate assembly (17a, 17b, 18) and retains, on the inside of the heating element (11), a spacer sleeve (20) and a water-spreading member (22) necessary for uniform spreading of incoming water along the inside wall of the heating element (8).

3. Apparatus according to claim 2, characterized in that the lower end (19'') of the thread of screwed bolt (19) is further used for securing the through-flow heater (8) in the housing (5) of the apparatus.

4. Apparatus according to any one of the preceding claims, characterized in that a spacer sleeve with a shoulder (21) and a water-spreading member (22) are arranged between the upper hard plate (17a) and the head of the bolt (19).

5. Apparatus according to any one of the preceding claims, characterized in that the hard plates are made of stainless steel.

6. Apparatus according to any one of the preceding claims, characterized in that the material of the rubber-elastic plate (18) is silicone rubber.

7. Apparatus according to any one of claims 1-5, characterized in that the material of the rubber-elastic plate (18) is EPDM.

## Patentansprüche

1. Vorrichtung zur Zubereitung von heißen Getränken, wie Kaffee oder Tee, mit einem rohrförmigen Durchflußerhitzer (8), mit einer Bodenplatte und mit einem Wasserzufuhrrohr (14, 15), die eine Verbindungskonstruktion zur Verbindung des Wasserzufuhrrohres mit der Bodenplatte des Durchflußerhitzers aufweist,
dadurch gekennzeichnet,
daß die Bodenplatte des rohrförmigen Durchflußerhitzers (8) durch die Anordnung von zwei Hartplatten (17, 17b) und einer dazwischengefügten Platte (18) aus gummielastischem Material gebildet wird, die einen Durchmesser aufweisen, welcher nur geringfügig kleiner als die Innenabmessung des Rohrteils (11) des Durchflußerhitzers (8) ist, wobei mindestens die Öffnung (17a', 17b', 18') zur Durchführung des Zufuhrrohres (14, 15) sich durch die drei Platten (17a, 17b, 18) erstreckt und ein Schraubbolzen (19) zum Aufeinanderziehen der Hartplatten (17a, 17b) angeordnet ist.

2. Vorrichtung nach Anspruch 1,
dadurch gekennzeichnet,
daß der Schraubbolzen (19) sich durch die Plattenanordnung (17a, 17b, 18) erstreckt und auf der Innenseite des Heizelements (11) eine Abstandshülse (20) sowie ein Wasserverteilelement (22) hält, welches für die gleichförmige Verteilung des ankommenden Wassers entlang der Innenwandung des Heizelements (8) notwendig ist.

3. Vorrichtung nach Anspruch 2,
dadurch gekennzeichnet,
daß das untere Ende (19'') des Gewindes des Schraubbolzens (19) noch zur Befestigung des Durchflußerhitzers (8) in dem Gehäuse (5) des Gerätes benutzt wird.

4. Vorrichtung nach einem der vorhergehenden Ansprüche,
dadurch gekennzeichnet,
eine Abstandshülse mit einer Schulter (21) und ein Wasserverteilelement (22) zwischen der oberen Hartplatte (17a) und im Kopf des Schraubbolzens (19) angeordnet sind.

5. Vorrichtung nach einem der vorhergehenden Ansprüche,
dadurch gekennzeichnet,
daß die Hartplatten aus rostfreiem Stahl bestehen.

6. Vorrichtung nach einem der vorhergehenden Ansprüche,
dadurch gekennzeichnet,
daß das Material der gummielastischen Platte (18) aus Silikongummi besteht.

7. Vorrichtung nach einem der Ansprüche 1 bis 5,
dadurch gekennzeichnet,
daß das Material der gummielastischen Platte (18) aus EPDM besteht.

## Revendications

1. Dispositif pour préparer des boissons chaudes, telles que le café ou le thé, avec un chauffe-eau continu tubulaire (8) ayant une plaque de fond et avec une conduite d'alimentation d'eau (14, 15), comprenant une construction de liaison pour joindre ladite conduite d'alimentation d'eau à la plaque de fond dudit chauffe-eau continu tubulaire, caractérisé en ce que la plaque de fond du chauffe-eau continu tubulaire (8) est constituée d'un ensemble de deux plaques dures (17a, 17b) ayant une plaque (18) d'une matière caoutchouc-élastique interposée entre eux, lesdites plaques (17a, 17b, 18) ayant un diamètre qui n'est qu'un peu plus petit que la dimension intérieure de la partie tubulaire (11) du chauffe-eau continu (8), au moins l'orifice (17a', 17b', 18') pour le passage par celui-ci de la conduite d'alimentation (14, 15) s'étendant au travers des trois plaques (17a, 17b, 18), et un bouton fileté (19) étant disposé pour tirer les plaques dures (17a, 17b) l'une vers l'autre.

2. Dispositif selon revendication 1, caractérisé en ce que le boulon fileté (19) s'étend par l'ensemble des plaques (17a, 17b, 18) et retient, à l'intérieur de l'élément de chauffage (11), une bouille d'écartement (20) et un élément de distribution d'eau (22) nécessaire pour répandre l'eau entrant uniformément le long de la paroi intérieure de l'élément de chauffage (8).

3. Dispositif selon revendication 2, caractérisé en ce que le bout inférieur (19'') du filet du boulon fileté (19) est utilisé également pour fixer le chauffe-eau continu (8) à la boîte (5) du dispositif.

4. Dispositif selon une des revendications précédentes, caractérisé en ce qu'une bouille d'écartement avec une épaule (21) et un élément de distribution d'eau (22) sont disposés entre la plaque dure supérieure (17a) et la tête du boulon (19).

5. Dispositif selon une des revendications précédentes, caractérisé en ce que les plaques dures sont faites d'acier inoxydable.

6. Dispositif selon une des revendications précédentes, caractérisé en ce que la matière de la plaque caoutchoucélastique (18) est caoutchouc à la silicone.

7. Dispositif selon une des revendications 1-5, caractérisé en ce que la matière de la plaque caoutchouc-élastique (18) est MDEP.
